# EUROPEAN PATENT APPLICATION

(11) **EP 4 838 212 A1**
(43) Date of publication of application: **11.11.2026**
(21) Application number: 25847438.6
(22) Date of filing: 20.08.2025
(51) Int. Cl.: G01N 29/04, G01N 29/265

(54) **ULTRASONIC TESTING METHOD AND SYSTEM APPLIED TO JOINT COATING TESTING, DEVICE AND MEDIUM**

(30) Priority: 20.08.2024 CN 202411144102
(71) Applicant: China Oil & Gas Pipeline Network Corporation, Beijing 100013 (CN); Pipechina Institute of Science and Technology, Tianjin 300450 (CN)
(72) Inventor: WANG, Weibin, Tianjin 300450 (CN); GONG, Qingjun, Tianjin 300450 (CN); ZHANG, Duihong, Tianjin 300450 (CN); GUO, Xu, Tianjin 300450 (CN)
(74) Representative: Murgitroyd & Company
(86) International application number: PCT/CN2025/115805
(87) International publication number: WO 2026/026987

(57) **Abstract**

An ultrasonic testing method and system applied to joint coating testing, a device and a medium. The method comprises: acquiring first position information corresponding to a joint coating, and, on the basis of a preset first heuristic search algorithm, calculating a movement path of an ultrasonic tester corresponding to the first position information (S101); on the basis of the movement path, acquiring a first ultrasonic image corresponding to the joint coating collected by the ultrasonic tester (S102); and, on the basis of a trained identification model, acquiring joint coating identification information corresponding to the first ultrasonic image, the joint coating identification information being abnormality determination information or normality determination information (S103).

## Description

The present disclosure claims priority to Chinese Patent Application No. 202411144102.0, filed on August 20, 2024, the entire contents of which are incorporated herein by reference in its entirety.

### TECHNICAL FIELD

The present disclosure relates to the field of ultrasonic testing for joint coating technologies, and in particular, to an ultrasonic testing method and system applied to joint coating inspection, a device, and a medium.

### BACKGROUND

In industrial and maintenance fields, ensuring structural integrity and safety is of critical importance. Joint coating bonding, as a common method for connecting and repairing critical structural components, has a quality that directly affects an overall stability and service life of a structure. Currently, ultrasonic testing technology is adopted to inspect joint coating bonding. Ultrasonic testing technology is widely used in aviation, aerospace, shipbuilding, construction, and other fields due to its advantages such as high sensitivity, strong material penetration capability, and ability to detect a deep defect.

### SUMMARY

In a first aspect, the present disclosure provides an ultrasonic testing method applied to joint coating inspection, where the method includes:
obtaining first position information corresponding to a joint coating, and calculating, based on a preset first heuristic search algorithm, a movement path of an ultrasonic detector corresponding to the first position information;
obtaining, based on the movement path, a first ultrasonic image corresponding to the joint coating acquired by the ultrasonic detector; and
obtaining, based on a trained recognition model, joint coating identification information corresponding to the first ultrasonic image, where the joint coating identification information is abnormality determination information or normality determination information.

In some embodiments, in a case where the joint coating identification information is the abnormality determination information, the method further includes:
obtaining a target repair solution corresponding to the abnormality determination information, so as to repair the joint coating according to the target repair solution.

In some embodiments, the obtaining the target repair solution corresponding to the abnormality determination information includes:
obtaining a current key feature corresponding to the abnormality determination information, and querying, based on an established standard solution database, a target repair solution corresponding to the current key feature, where the standard solution database includes repair solutions corresponding to different key features.

In some embodiments, after the obtaining the target repair solution corresponding to the abnormality determination information, the method further includes:
obtaining a second ultrasonic image corresponding to the joint coating acquired by the ultrasonic detector upon repair is completed;
determining whether joint coating identification information corresponding to the second ultrasonic image is the abnormality determination information; and
correcting, in a case where the joint coating identification information corresponding to the second ultrasonic image is the abnormality determination information, the target repair solution in the standard solution database based on the second ultrasonic image and the abnormality determination information.

In some embodiments, after the joint coating has been repaired based on the target repair solution, the method further includes:
obtaining, in a case where a repaired joint coating requires re-inspection, a first position coordinate corresponding to the ultrasonic detector and a second position coordinate corresponding to the joint coating;
calculating, based on a preset second heuristic search algorithm, a re-inspection path between the first position coordinate and the second position coordinate;
obtaining a third ultrasonic image corresponding to the repaired joint coating acquired by the ultrasonic detector during re-inspection according to the re-inspection path; and
comparing the third ultrasonic image with a preset ultrasonic image corresponding to the repaired joint coating, and determining, based on a comparison result, whether a re-inspection position of the joint coating is accurate.

In some embodiments, the obtaining the first position information corresponding to the joint coating includes:
Sa: initializing, based on a search region, a set of particles to obtain a particle set, where second position information of each particle represents a hypothetical position corresponding to the joint coating, and assigning an initial weight to each particle, where initial weights corresponding to respective particles are equal to each other, and a weight corresponding to each particle is a parameter characterizing an accuracy of the hypothetical position;
Sb: predicting, based on a static model, a next position corresponding to each particle in the particle set, and updating the second position information of a corresponding particle according to each predicted position;
Sc: obtaining, for each particle, based on an updated second position information of the particle, a joint coating feature matching degree corresponding to the particle, and obtaining, based on the joint coating feature matching degree, an updated weight corresponding to the particle, where the updated weight is used to replace the initial weight as a new weight of the particle;
Sd: performing resampling, based on updated weights corresponding to respective particles, to obtain a new particle set; and
Se: performing Sb to Sd repeatedly, based on the new particle set, until a preset ending condition is met, and outputting final first position information, based on updated second position information and updated weights of particles in the new particle set.

In some embodiments, a training method for a recognition model includes:
obtaining a joint coating ultrasonic image dataset, preprocessing the joint coating ultrasonic image dataset, and dividing a preprocessed joint coating ultrasonic image dataset into a training set and a validation set;
labeling each piece of ultrasonic image data in the training set and the validation set to determine joint coating identification information corresponding to each piece of ultrasonic image data; and
training an initial model based on the training set, and validating a trained initial model through the validation set to obtain the trained recognition model.

In a second aspect, the present disclosure provides an ultrasonic testing system applied to joint coating inspection, where the system includes: a path planning unit, an acquisition unit, and an abnormality identification unit, where
the path planning unit is configured to obtain first position information corresponding to a joint coating, and to calculate, based on a preset first heuristic search algorithm, a movement path of an ultrasonic detector corresponding to the first position information;
the acquisition unit is configured to obtain, based on the movement path, a first ultrasonic image corresponding to the joint coating acquired by the ultrasonic detector; and
the abnormality identification unit is configured to obtain, based on a trained recognition model, joint coating identification information corresponding to the first ultrasonic image, where the joint coating identification information is abnormality determination information or normality determination information.

In a third aspect, the present disclosure provides an electronic device, including a processor and a memory, where the processor is coupled with the memory;
the processor is configured to execute a computer program stored in the memory, to enable the electronic device to perform the method according to any one of the first aspect or the embodiments.

In a fourth aspect, the present disclosure provides a computer-readable storage medium, including a computer program or instructions, where the computer program or the instructions, upon being run on a computer, enable the computer to perform the method according to any one of the first aspect or the embodiments.

In a fifth aspect, the present disclosure provides a computer program product, including computer instructions, where the computer instructions, upon being executed by a processor, implement the method according to any one of the first aspect or the embodiments.

In a sixth aspect, the present disclosure provides a computer program, including computer instructions, where the computer instructions, upon being executed by a processor, implement the method according to any one of the first aspect or the embodiments.

### BRIEF DESCRIPTION OF THE DRAWINGS

FIG. 1 is a schematic flowchart of an ultrasonic testing method applied to joint coating inspection according to the embodiments of the present disclosure.
FIG. 2 is a schematic flowchart of a method for determining first position information according to the embodiments of the present disclosure.
FIG. 3 is a schematic flowchart of a method for determining a movement path according to the embodiments of the present disclosure.
FIG. 4 is a block diagram of a structure of an ultrasonic testing system applied to joint coating inspection according to the embodiments of the present disclosure.
FIG. 5 is an overall block diagram of an ultrasonic testing system applied to joint coating inspection according to the embodiments of the present disclosure.
FIG. 6 is a block diagram of a structure of an electronic device according to the embodiments of the present disclosure.

### DETAILED DESCRIPTION

In related art, an ultrasonic automatic testing system for copper and stainless steel dissimilar metal vacuum brazed water joints includes hardware such as an automatic water joint testing apparatus, a single-crystal immersion focused probe, and a reference test block. The testing apparatus includes an industrial control computer, a motor driver and a motor controlled by the industrial control computer, and an ultrasonic flaw detector respectively connected to the single-crystal immersion focused probe and the industrial control computer. One motor of the testing apparatus drives a vertically moving transmission shaft on which a probe angle adjuster is mounted, the single-crystal immersion focused probe is mounted at a lower end of the probe angle adjuster, and another motor drives a horizontal turntable carrying a water joint to be tested. A position of the probe within a cavity of the water joint is adjusted through adjusting the probe angle adjuster, and ultrasonic waves are emitted to detect a brazing quality of the water joint.

Although the above testing system can realize automatic control, it has a deficiency in that no ultrasonic testing path planning is performed during an actual joint coating testing process. Therefore, there is an urgent need for a solution that can automatically perform testing path planning for joint coating inspection.

The present disclosure will be further described in detail below with reference to the accompanying drawings.

The embodiments of the present disclosure provide an ultrasonic testing method applied to joint coating inspection. The method may be executed by a device, and the device may be a server or a terminal device. The server may be an independent physical server, a server cluster or a distributed system composed of multiple physical servers, or a cloud server providing a cloud computing service. The terminal device may be a smart phone, a tablet computer, a desktop computer, or the like, but is not limited thereto.

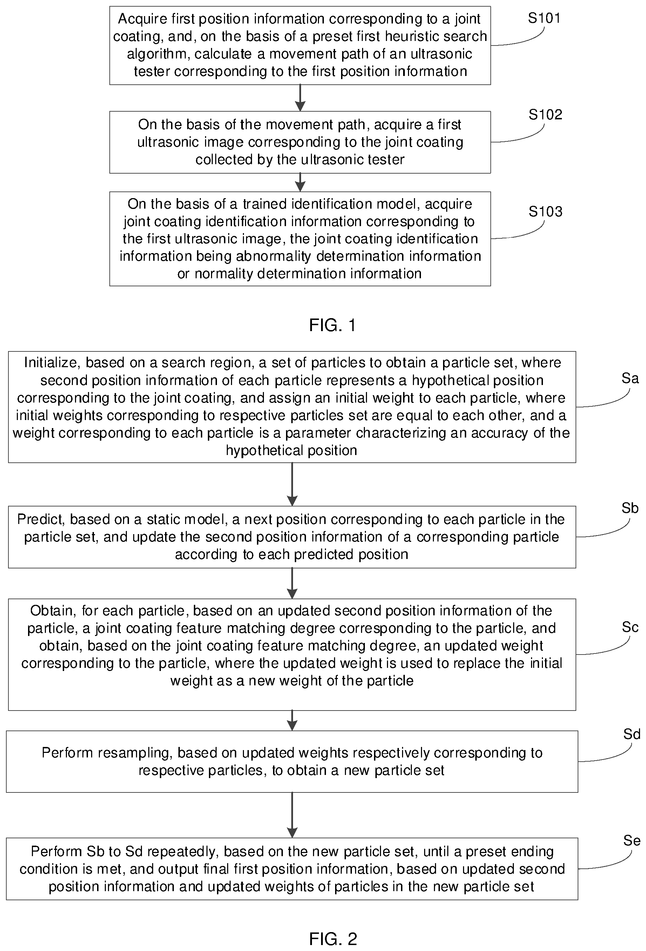

As shown in FIG. 1, an ultrasonic testing method applied to joint coating inspection, with an electronic device as an execution subject, and a main process of the method is described as follows (at least including S101 to S103).

In S101: first position information corresponding to a joint coating is obtained, and a movement path of an ultrasonic detector corresponding to the first position information is calculated based on a preset first heuristic search algorithm.

In the present embodiment, the first position information may be a position region corresponding to the joint coating. It is readily understood that the ultrasonic detector is a device that uses ultrasonic testing technology to inspect a joint coating bonding. The movement path is a path that guides the ultrasonic detector to reach the joint coating for inspection. The first heuristic search algorithm may be an A* heuristic search algorithm.

In S102: a first ultrasonic image corresponding to the joint coating acquired by the ultrasonic detector is obtained based on the movement path.

It is readily understood that an ultrasonic image is a non-invasive imaging image generated through utilizing reflection and scattering characteristics of ultrasonic waves at the joint coating, using an ultrasonic probe to transmit and receive ultrasonic waves, thereby obtaining an internal structure and tissue information of the joint coating.

In S103: joint coating identification information corresponding to the first ultrasonic image is obtained based on a trained recognition model, where the joint coating identification information is abnormality determination information or normality determination information.

In the present embodiment, a recognition model may be a deep neural network model. An ultrasonic image corresponding to the joint coating is input into a trained deep neural network model, and the deep neural network model may recognize the ultrasonic image and output joint coating identification information. The joint coating identification information is a parameter characterizing an inspection result of the joint coating. In a case where the joint coating identification information is the abnormality determination information, it indicates that the joint coating is abnormal; in a case where the joint coating identification information is the normality determination information, it indicates that the joint coating is normal.

The abnormality determination information may include at least one of an abnormality type, an abnormality distribution condition, or an abnormality degree. Herein, the abnormality type may include at least one of a crack, a porosity, or an inclusion. The abnormality distribution condition may include a dispersed defect, a locally concentrated defect, and a widely distributed defect. The abnormality degree may include slight, moderate, and severe. It is readily understood that the crack refers to a fissure in the joint coating, the porosity refers to a void or a bubble in the joint coating, and the inclusion refers to a foreign matter in the joint coating. The dispersed defect means that abnormalities are randomly distributed in the joint coating; the locally concentrated defect means that abnormalities are highly concentrated in a certain local region of the joint coating; the widely distributed defect means that abnormalities are extensively present throughout the joint coating. Slight means that abnormality has a minor impact on a performance of the joint coating; moderate means that abnormality has a certain impact on a performance of the joint coating; and severe means that abnormality has a serious impact on a performance of the joint coating.

In some embodiments, the electronic device is preset with a correspondence relationship among the abnormality type, the abnormality distribution condition, and the abnormality degree. For example, in a case where the abnormality type is the crack and the abnormality distribution condition is widely distributed, a corresponding abnormality degree may be severe; in a case where the abnormality type is the porosity and the abnormality distribution condition is dispersed, a corresponding abnormality degree may be slight; in a case where the abnormality type is the inclusion and the abnormality distribution condition is locally concentrated, a corresponding abnormality degree may be moderate.

In the present embodiment, the trained deep neural network model can automatically identify the joint coating identification information corresponding to the first ultrasonic image through adopting deep learning technology, thereby improving an accuracy and efficiency of ultrasonic image recognition.

The electronic device may feed back the joint coating identification information to a user terminal, so that a user may understand a current inspection status of the joint coating. During a joint coating inspection process, a movement path of the ultrasonic detector is first planned. The ultrasonic detector can move along an optimal movement path through path planning, reducing unnecessary detours and repeated inspections, thereby improving an inspection efficiency significantly. The movement path planning may ensure that the ultrasonic detector can avoid an obstacle and a dangerous region during movement, ensuring a safety and stability of an inspection process. The movement path planning can ensure that the ultrasonic detector covers the joint coating to be inspected comprehensively, thereby reducing a possibility of an omission and a false detection.

In some embodiments, the electronic device may obtain environmental sensor data of the joint coating being inspected in real time. Herein, the environmental sensor data may include at least one of: an LiDAR point cloud, a piece of an infrared ranging data, or a visual camera image, etc. It is determined whether there is a dynamic obstacle on the movement path based on the environmental sensor data. In a case where there is a dynamic obstacle on the movement path, the first heuristic search algorithm is constrained based on a time sliding window mechanism, and within a local path range covered by the time sliding window, an optimized path avoiding the dynamic obstacle is re-planned, and the optimized path is used as a new path for the ultrasonic detector.

In the present embodiment, the electronic device stores a positioning and recognition strategy for identifying the first position information. Herein, the positioning and recognition strategy may include processes of: acquiring an ultrasonic image of the joint coating to be inspected through a high-resolution device, performing image preprocessing such as image denoising and image enhancement on the ultrasonic image to optimize an ultrasonic image quality; extracting position and a morphological feature of the joint coating from a preprocessed ultrasonic image using a convolutional neural network, and distinguishing the joint coating from a surrounding structure through image segmentation to obtain a search region corresponding to the joint coating to be inspected; and determining the first position information of the joint coating based on a probabilistic model-based positioning algorithm automatically and accurately.

Herein, a positioning algorithm may adopt a Monte Carlo positioning algorithm. Accurate imaging of the joint coating to be inspected, feature extraction corresponding to the joint coating, and accurate identification of spatial position are achieved through the positioning and recognition strategy, thereby providing a reliable data foundation for subsequent optimization of the movement path.

As shown in FIG. 2, in the present embodiment, the determining the first position information of the joint coating based on the probabilistic model-based positioning algorithm automatically and accurately may at least include processes of Sa to Se.

In Sa: a set of particles is initialized, based on a search region, to obtain a particle set, where second position information of each particle represents a hypothetical position corresponding to the joint coating, and assign an initial weight to each particle, where initial weights corresponding to respective particles are equal to each other, and a weight corresponding to each particle is a parameter characterizing an accuracy of the hypothetical position.

Upon initiation, particles are randomly distributed within the search region, and each particle is assigned an identical initial weight, indicating that all position hypotheses have a same likelihood at a beginning.

In Sb: a next position corresponding to each particle in the particle set is predicted based on a static model, and the second position information of a corresponding particle according to each predicted position is updated.

Herein, the static model predicts a possible position of each particle in the particle set at a next moment (or next step), and updates the second position information of the particle according to a predicted position.

In Sc: for each particle, a joint coating feature matching degree corresponding to the particle is obtained based on an updated second position information of the particle, and an updated weight corresponding to the particle is obtained based on the joint coating feature matching degree, where the updated weight is used to replace the initial weight as a new weight of the particle.

After updating the second position information of the particles, a matching degree between the second position information of each particle and joint coating features (e.g., edges, textures, etc. in the ultrasonic image) may be calculated to obtain the joint coating feature matching degree for each particle, and then an updated weight is reassigned to a corresponding particle based on the joint coating feature matching degree. Exemplarily, a particle with a higher joint coating feature matching degree is assigned with a higher updated weight, indicating that the second position information of the particle is more likely to be a true position of the joint coating.

In Sd: resampling is performed based on updated weights respectively corresponding to respective particles to obtain a new particle set.

Over time, the updated weights of some particles become very low, while those of others become very high. To avoid wasting computational resources on particles with low updated weights, resampling is necessary. During resampling, particles with high updated weights are more likely to be selected multiple times, while particles with low updated weights may be ignored or selected only once. In this way, the new particle set will be more concentrated near the true position of the joint coating.

In Se: Sb to Sd are performed repeatedly, based on the new particle set, until a preset ending condition is met, and final first position information is output, based on updated second position information and updated weights of particles in the new particle set.

Thus, feature extraction and accurate spatial position identification of the joint coating to be inspected are achieved, thereby providing a reliable data foundation for subsequent optimization of the movement path.

Herein, the preset ending condition may be that a number of repetitions reaches a preset iteration number, or that the updated second position information of a preset number of particles in the new particle set reaches position estimation convergence.

Due to randomness of particles and a dynamic nature of a system, the second position information of the particles in the particle set changes in each update iteration. However, when position estimation converges, a distribution of the particle set can stably reflect the true position of the joint coating, that is, a preset number of particles in the particle set are concentrated near the true position of the joint coating, and such distribution no longer changes significantly.

In the present embodiment, a weighted average position may be calculated based on the updated second position information and updated weights of all particles, and the weighted average position may be used as the first position information of the joint coating, where particles with higher updated weights contribute more to the final first position information.

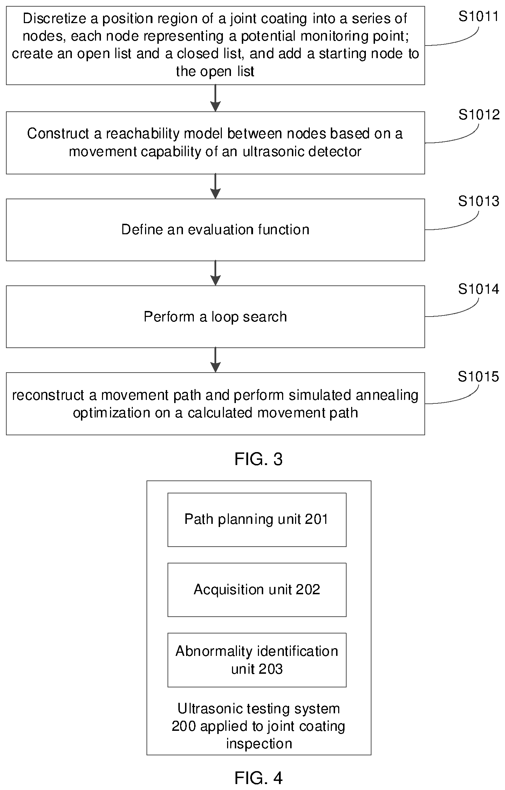

As shown in FIG. 3, in the present embodiment, taking an example in which the first heuristic search algorithm is an A* heuristic search algorithm, S101 may further at least include processes of S1011 to S1015.

In S1011: a position region of a joint coating is discretized into a series of nodes, each node representing a potential monitoring point; an open list and a closed list are created, and a starting node is added to the open list.

In the open list (Kᵢ, Kⱼ) and the closed list (Gᵢ, Gⱼ), where i, j = 0...N.

Nodes are basic units of a search algorithm. Two lists are created to manage nodes during a search process: the open list may contain nodes to be evaluated, and the closed list may contain nodes that have already been evaluated. A starting node (an initial position of the ultrasonic detector) is added to the open list as a starting point of a search.

In S1012: a reachability model between nodes is constructed based on a movement capability of the ultrasonic detector.

In S1013: an evaluation function is defined, and the evaluation function may be expressed as: $φ \left(n\right) = αg \left(n\right) + βh \left(n\right) + γe \left(n\right)$ where g(n) represents an actual distance from a starting node (K₀, K₀) to a current node (K_{di}, K_{dj}), where 0 < dᵢ < N, 0 < dⱼ < N; h(n) represents a predicted distance from the current node (K_{di}, K_{dj}) to a target node (Kₘᵢ, Kₘⱼ), where 0 < mᵢ < N, 0 < Kₘⱼ < N; and e(n) represents an energy consumption to pass through the target node (Kₘᵢ, Kₘⱼ); where α, β, and γ are weight coefficients for adjusting an influence of each part on a total evaluation.

In S1014: a loop search is performed.

Herein, S1014 may include: when the open list is not empty, Sf, Sg, and Sh are repeated;
in Sf: a node with a lowest φ(n) value from the open list is selected as the current node (K_{di}, K_{dj});
in Sg: the current node (K_{di}, K_{dj}) is moved to the closed list; and
in Sh: a neighboring node (K_{di-1}, K_{dj-1}) of the current node (K_{di}, K_{dj}) is evaluated.

Herein, Sh may include:
if the neighboring node (K_{di-1}, K_{dj-1}) is already in the closed list or is determined to be unreachable based on a reachability model, skip it;
otherwise, a path from the starting node (K₀, K₀) to the neighboring node (K_{di-1}, K_{dj-1}) through the current node (K_{di}, K_{dj}) is calculated;
if the neighboring node (K_{di-1}, K_{dj-1}) is not in the open list, add it;
if the neighboring node (K_{di-1}, K_{dj-1}) is in the open list but a new path is better, update information of the current node (K_{di}, K_{dj}); and
the neighboring node(K_{di-1}, K_{dj-1}) of the current node (K_{di}, K_{dj}) is recorded for subsequent path reconstruction.

In S1015: the movement path is reconstructed and simulated annealing optimization is performed on a calculated movement path.

When the target node (Kₘᵢ, Kₘⱼ) is added to the open list, a path is found. Backtracking from the target node (Kₘᵢ, Kₘⱼ) to the starting node (K₀, K₀) through neighboring node (K_{di-1}, K_{dj-1}) information may reconstruct a complete movement path, and then simulated annealing optimization is performed on the calculated movement path. The movement path is converted into control instructions to drive the ultrasonic detector to perform inspection along the movement path. When all potential monitoring points of the joint coating have been inspected, the joint coating inspection ends.

In the present embodiment, S1012 may at least include the following processes.

An environment of a position region of the joint coating is converted into a discrete grid structure, a movement capability of the ultrasonic detector is determined according to a physical characteristic of the ultrasonic detector, and a size and a shape of the grid structure according to the movement capability of the ultrasonic detector is determined, where the movement capability includes a movement direction, a movement distance, and a turning restriction.

The joint coating position region is converted into a discrete grid structure for facilitating modeling and computation.

A boundary of a detection region is defined, and obstacles in an impassable region in the grid structure are marked, where the obstacles include a pipeline, a device, and other fixed structures.

Obstacle coordinates may be marked through setting specific values at positions of obstacles in the grid structure. Marking obstacles in impassable regions in the grid structure ensures that a generated movement path does not pass through these regions.

An r × r matrix is created, where r represents a total number of nodes in the environment. For each pair of nodes (p, q), where p, q = 1...r, if node q is within a movement range of node p and there is no obstacle between node q and node p, a corresponding position in the matrix is marked as reachable.

Creating the matrix may be used to record reachability between nodes. If there is no obstacle between two nodes and a distance is within a movement range of a probe, they are considered reachable.

Based on reachability information between nodes, a graph T = (V, E) is constructed, where V is a set of nodes, representing each node corresponding to a specific position in physical space; E is a set of edges, representing a connection between nodes. For each pair of nodes in the graph, if a distance between the nodes is less than or equal to a one-step movement distance of a probe and there is no obstacle on a line connecting the nodes, add an edge between the nodes.

Based on the reachability information between nodes, a graph is constructed to represent a connection between nodes. Each edge in the graph represents a possible movement path between nodes.

Energy consumption and time consumption between nodes are calculated, cost information is contained in an adjacency matrix, and assign a cost value to each reachable node.

Assign a cost value to each reachable node, where the cost value may include factors such as an energy consumption and a time consumption, for evaluating a quality of a path. The adjacency matrix is used to store reachability information between nodes. When checking whether nodes are reachable, the adjacency matrix may be used to look up a corresponding entry. When it is necessary to check reachability between nodes, the corresponding entry may be looked up in the adjacency matrix based on indices (or identifiers) of the nodes.

Efficient and comprehensive coverage of an entire position region of the joint coating is achieved through using the A* heuristic search algorithm to calculate the movement path of the ultrasonic detector, thereby improving an inspection efficiency and coverage, and ensuring an accuracy and reliability of the inspection process.

In the present embodiment, a training method for a recognition model may include processes of:
obtaining a joint coating ultrasonic image dataset, preprocessing the joint coating ultrasonic image dataset, and dividing a preprocessed joint coating ultrasonic image dataset into a training set and a validation set; labeling each piece of ultrasonic image data in the training set and the validation set to determine joint coating identification information corresponding to each piece of ultrasonic image data; and training an initial model based on the training set, and validating a trained initial model through the validation set to obtain the trained recognition model.

Thus, the trained recognition model can automatically identify the joint coating identification information corresponding to the first ultrasonic image, thereby improving the accuracy and efficiency of ultrasonic image recognition.

A large amount of ultrasonic image data of joint coatings is used to train a deep neural network model so that the deep neural network model can automatically learn and recognize a feature pattern of the ultrasonic image data of the joint coating. Preprocessing the joint coating ultrasonic image dataset includes resizing, normalizing pixel values, contrast enhancement, and other processes to reduce a computational burden during model training and improve recognition accuracy.

After preprocessing the joint coating ultrasonic image dataset, the ultrasonic image data in the ultrasonic image dataset need to be labeled to clarify the joint coating identification information corresponding to each piece of ultrasonic image data.

Using a labeled training set to train an initial model, ultrasonic image features are extracted from input ultrasonic image data and mapped to correct joint coating identification information. Weights in a network are adjusted through a backpropagation algorithm. A cross-entropy loss function is used as a metric for classification performance, and an RMSprop algorithm is used to optimize a parameter of the deep neural network model. A formula for the RMSprop algorithm may be expressed as: ${v}_{t} = {ωv}_{t - 1} + \left(1-ω\right) {g}_{t}^{2}$ ${θ}_{t + 1} = {θ}_{t} - \frac{η}{\sqrt{{v}_{t} + ε}} {g}_{t}$ where vₜ represents an exponentially weighted moving average of a squared gradient, ω represents a decay factor, typically set to 0.9, gₜ represents a gradient at time step t, θₜ represents a parameter model at time step t, η represents a learning rate, and ε represents a constant to avoid division by zero.

Each piece of ultrasonic image data in the validation set are used to evaluate a performance of the deep neural network model, and a structure, a hyperparameter, and a training strategy of the deep neural network model are adjusted to improve a generalization ability of the deep neural network model.

In the present embodiment, if the joint coating identification information is the abnormality determination information, the method further includes: obtaining a target repair solution corresponding to the abnormality determination information, so as to repair the joint coating according to the target repair solution.

Herein, a repair solution is a solution for repairing the joint coating. When the joint coating is abnormal, it may be repaired according to the target repair solution corresponding to the abnormality determination information, thereby improving a standardization of repair work of the joint coating and a quality of repair rework of the joint coating.

The obtaining the target repair solution corresponding to the abnormality determination information may include processes of: obtaining a current key feature corresponding to the abnormality determination information, and querying, based on an established standard solution database, a target repair solution corresponding to the current key feature, where the standard solution database includes repair solutions corresponding to different key features.

The target repair solution corresponding to the abnormality determination information may be queried through the standard solution database, thereby improving an accuracy of the target repair solution and ensuring a repair effect of the joint coating.

In the present embodiment, the establishing the standard solution database may include:
determining a data type, a query type, and a user group that the standard solution database needs to support, and identifying a data source;
collecting and organizing a historical repair case, including a repair solution, a material type used, and a repair effect, and obtaining an industry standard and a specification document for joint coating bonding quality;
performing data cleaning on a collected historical repair case, extracting key features from complex data, and converting data into a unified format for storage and query, where data cleaning includes removing inconsistent, erroneous, and incomplete data, the key features may include a material type, an abnormality type, an abnormality distribution condition, an abnormality degree, and a repair solution; and
designing an entity-relationship model for the standard solution database, including an entity, an attribute, and a relationship; setting a storage structure as a relational database and setting a hash index to improve query efficiency; setting a data access permission according to a user role, such as read-only, read-write, and management.

Herein, the data type may include structured data, semi-structured data, and unstructured data. Where the structured data may include a table, a number, and a text; the semi-structured data may include XML and JSON; and the unstructured data may include an image, an audio, and a video.

The query type may include a simple query, a complex query, a full-text search, and a real-time query. The user group may include an inspection engineer, a maintenance personnel, an R&D (research and development) personnel, and a regulatory personnel. The data source may include an internal data source and an external data source.

The target repair solution corresponding to the current key feature may be queried through a correspondence relationship between the key feature and the repair solution in the standard solution database.

In some embodiments, the obtaining the target repair solution corresponding to the abnormality determination information may include: obtaining a current key feature corresponding to the abnormality determination information, and obtaining, based on a trained neural network model, a target repair solution corresponding to the current key feature. As an example, a conditional generative adversarial network model may be used, with an input being the current key feature corresponding to the abnormality determination information and an output being a repair solution. Training data may include a historical anomaly sample library containing features of different joint coating abnormalities and corresponding successful repair solution records.

In the present embodiment, after the obtaining the target repair solution corresponding to the abnormality determination information, the method further includes: obtaining a second ultrasonic image corresponding to the joint coating acquired by the ultrasonic detector upon repair is completed; determining whether joint coating identification information corresponding to the second ultrasonic image is the abnormality determination information; and correcting, in a case where the joint coating identification information corresponding to the second ultrasonic image is the abnormality determination information, the target repair solution in the standard solution database based on the second ultrasonic image and the abnormality determination information.

During a repair process, an ultrasonic testing device is used to collect inspection data. It is determined whether a repair quality of the joint coating reaches a predetermined standard in the industry standard and the specification document for joint coating bonding quality according to an actual ultrasonic inspection result. If the predetermined standard is reached, the joint coating identification information corresponding to the second ultrasonic image is the normality determination information; if the predetermined standard is not reached, the joint coating identification information corresponding to the second ultrasonic image is the abnormality determination information.

In a case where the joint coating identification information corresponding to the second ultrasonic image is the abnormality determination information, a repaired joint coating has a defect. A detected second ultrasonic image and the abnormality determination information may be fed back to the standard solution database to modify the standard solution database, thereby improving a reliability and effectiveness of an overall repair work.

In the present embodiment, after the joint coating has been repaired based on the target repair solution, the method further includes processes of: obtaining, in a case where a repaired joint coating requires re-inspection, a first position coordinate corresponding to the ultrasonic detector and a second position coordinate corresponding to the joint coating; calculating, based on a preset second heuristic search algorithm, a re-inspection path between the first position coordinate and the second position coordinate; obtaining a third ultrasonic image corresponding to the repaired joint coating acquired by the ultrasonic detector during re-inspection according to the re-inspection path; and comparing the third ultrasonic image with a preset ultrasonic image corresponding to the repaired joint coating, and determining, based on a comparison result, whether a re-inspection position of the joint coating is accurate.

Based on the second position coordinate of the repaired joint coating and the first position coordinate of the ultrasonic detector, a fast path planning algorithm may be used to calculate a shortest and obstacle-free optimal re-inspection path, ensuring that the ultrasonic detector can move along the re-inspection path to a position of the repaired joint coating quickly and accurately, thereby achieving efficient re-inspection.

The second heuristic search algorithm may also be an A* heuristic search algorithm. The calculating, based on the preset second heuristic search algorithm, the re-inspection path between the first position coordinate and the second position coordinate may include:
obtaining first position coordinates (x_{c}, y_{c}) and all second position coordinates (xᵢ, yᵢ) requiring re-inspection, and taking all second position coordinates requiring re-inspection as target coordinates;
using the A* heuristic search algorithm to calculate the shortest path through constructing a node network, where each node represents a position point, an edge between nodes represents a feasibility of movement, and a weight of an edge represents a movement cost;
defining an evaluation function, and the evaluation function may be expressed as: $f \left(n\right) = g \left(n\right) + h \left(n\right)$
where g(n) is an actual distance from a starting point to a current node, using Manhattan distance as a movement cost, then g(n) = d(start, n); h(n) is an estimated distance from the current node to a target node, based on heuristic estimation, using Euclidean distance defined as $h \left(n\right) = \sqrt{{\left({x}_{n}-{x}_{goal}\right)}^{2} + {\left({y}_{n}-{y}_{goal}\right)}^{2}}$, where xₙ , yₙ respectively represent a horizontal coordinate and a vertical coordinate of the current node n in two-dimensional space, and x_{goal}, y_{goal} respectively represent a horizontal coordinate and a vertical coordinate of the target node in two-dimensional space; and
executing the A* heuristic search algorithm, selecting a node with a lowest f(n) value as a next visited node until reaching the target node, and generating a re-inspection path.

An entire search region is abstracted as a node network, where each node represents a position point (which may be a starting node, a target node, or any point on a path). The edge between nodes represents a feasibility of moving from one node (position) to another node, and the weight of the edge represents a cost (or price) of moving from one node to another node. In the present embodiment, Manhattan distance is used to calculate an actual movement cost.

The Manhattan distance represents a distance from one point to another point when movement is constrained to a grid line. The Euclidean distance provides an estimation of a straight-line distance between two points.

The electronic device is configured with an image guidance strategy, where the image guidance strategy includes acquiring a real-time third ultrasonic image of a repaired joint coating position through the ultrasonic detector, and performing preprocessing such as denoising and enhancement on the third ultrasonic image to improve a clarity degree of the third ultrasonic image.

The electronic device stores a preset ultrasonic image corresponding to the repaired joint coating, and the preset ultrasonic image is served as a standard ultrasonic image. A Canny edge detection algorithm may be used to identify a contour of a joint coating in the third ultrasonic image, and the third ultrasonic image is compared with the preset ultrasonic image using a structural similarity index to verify an accuracy of a re-inspection position corresponding to the joint coating.

It may be ensured that the ultrasonic detector moves efficiently and accurately to a position of the joint coating requiring re-inspection after repair during a re-inspection process, and high-precision re-inspection verification is achieved through the image guidance strategy.

Based on a same technical concept, the present disclosure further provides an ultrasonic testing system applied to joint coating inspection. As shown in FIG. 4, the ultrasonic testing system 200 applied to joint coating inspection may include: a path planning unit 201, an acquisition unit 202, and an abnormality identification unit 203; where
the path planning unit 201 is configured to obtain first position information corresponding to a joint coating, and calculating, based on a preset first heuristic search algorithm, a movement path of an ultrasonic detector corresponding to the first position information;
the acquisition unit 202 is configured to obtain, based on the movement path, a first ultrasonic image corresponding to the joint coating acquired by the ultrasonic detector; and
the abnormality identification unit 203 is configured to obtain, based on a trained recognition model, joint coating identification information corresponding to the first ultrasonic image, where the joint coating identification information is abnormality determination information or normality determination information.

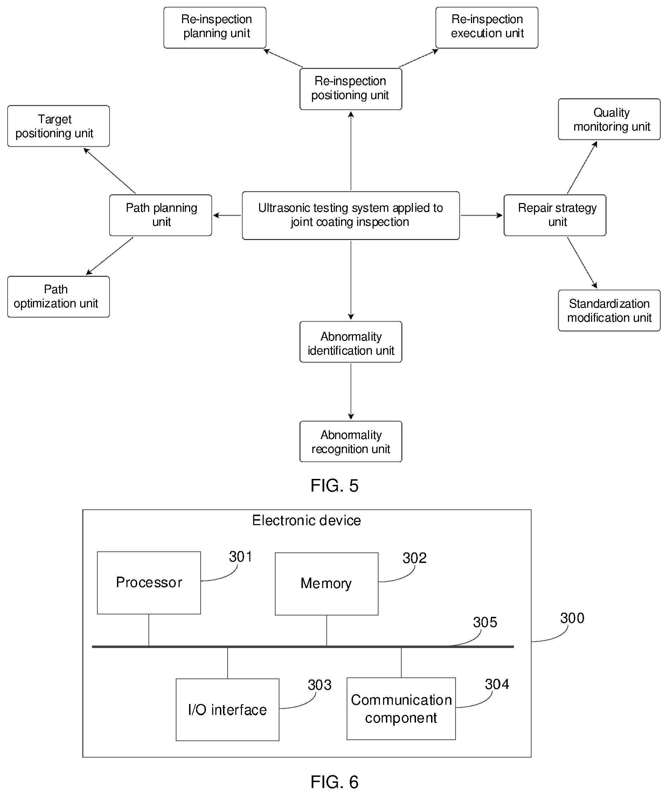

As shown in FIGS. 4 and 5, in some embodiments, the path planning unit 201 includes a target positioning unit and a path optimization unit; where
the target positioning unit may include: an initialization submodule, a prediction update submodule, a weight update submodule, a resampling submodule, and an iteration submodule, where
the initialization submodule is configured to initialize a set of particles, based on a search region, to obtain a particle set, where second position information of each particle represents a hypothetical position corresponding to the joint coating, and assign an initial weight to each particle, where initial weights corresponding to respective particles are equal to each other, and a weight corresponding to each particle is a parameter characterizing an accuracy of the hypothetical position;
the prediction update submodule is configured to predict, a next position corresponding to each particle in the particle set, based on a static model, and update the second position information of a corresponding particle according to each predicted position;
the weight update submodule is configured to obtain, for each particle, a joint coating feature matching degree corresponding to the particle, based on an updated second position information of the particle, and obtain an updated weight corresponding to the particle based on the joint coating feature matching degree, where the updated weight is used to replace the initial weight as a new weight of the particle;
the resampling submodule is configured to perform resampling based on updated weights respectively corresponding to respective particles to obtain a new particle set; and
the iteration submodule is configured to repeat processing of the prediction update submodule to the resampling submodule, based on the new particle set, until a preset ending condition is met, and output final first position information, based on updated second position information and updated weights of particles in the new particle set.

In some embodiments, the first heuristic search algorithm may be an A* heuristic search algorithm, and the path optimization unit is configured to calculate a movement path based on the A* heuristic search algorithm.

In some embodiments, the abnormality identification unit 203 includes an abnormality recognition unit; the recognition model may be a deep neural network model. The abnormality recognition unit is configured to obtain the joint coating identification information based on a trained deep neural network model.

A training apparatus for a recognition model includes: an acquisition and processing module, a labeling module, and a training and validation module, where
the acquisition and processing module is configured to obtain a joint coating ultrasonic image dataset, preprocess the joint coating ultrasonic image dataset, and divide a preprocessed joint coating ultrasonic image dataset into a training set and a validation set;
the labeling module is configured to label each piece of ultrasonic image data in the training set and the validation set to determine joint coating identification information corresponding to each piece of ultrasonic image data; and
the training and validation module is configured to train an initial model based on the training set, and validate a trained initial model through the validation set to obtain the trained recognition model.

In some embodiments, in a case where the joint coating identification information is the abnormality determination information, the system further includes a repair strategy unit and a quality monitoring unit; where
the repair strategy unit is configured to obtain a target repair solution corresponding to the abnormality determination information, so as to repair the joint coating according to the target repair solution;
the repair strategy unit further includes: a query submodule, where
the query submodule is configured to obtain a current key feature corresponding to the abnormality determination information, and query, based on an established standard solution database, a target repair solution corresponding to the current key feature, where the standard solution database includes repair solutions corresponding to different key features.

The repair strategy unit further includes: a first acquisition submodule, a quality monitoring unit, and a standardization modification unit, where
the first acquisition submodule is configured to obtain a second ultrasonic image corresponding to the joint coating acquired by the ultrasonic detector upon repair is completed;
the quality monitoring unit is configured to determine whether joint coating identification information corresponding to the second ultrasonic image is the abnormality determination information; in a case where the joint coating identification information corresponding to the second ultrasonic image is the abnormality determination information (i.e., if so), turn to the standardization modification unit; and
the standardization modification unit is configured to correct the target repair solution in the standard solution database based on the second ultrasonic image and the abnormality determination information.

In some embodiments, after the joint coating has been repaired based on the target repair solution, the system further includes a re-inspection positioning unit, where the re-inspection positioning unit includes a re-inspection planning unit and a re-inspection execution unit; where
the re-inspection planning unit includes: a second acquisition submodule and a calculation submodule, where
the second acquisition submodule is configured to obtain, in a case where a repaired joint coating requires re-inspection, a first position coordinate corresponding to the ultrasonic detector and a second position coordinate corresponding to the joint coating; and
the calculation submodule is configured to calculate, based on a preset second heuristic search algorithm, a re-inspection path between the first position coordinate and the second position coordinate.

The re-inspection execution unit includes: a third acquisition submodule, and a comparison and determination submodule, where
the third acquisition submodule is configured to obtain a third ultrasonic image corresponding to the repaired joint coating acquired by the ultrasonic detector during re-inspection according to the re-inspection path; and
the comparison and determination submodule is configured to compare the third ultrasonic image with a preset ultrasonic image corresponding to the repaired joint coating, and determine, based on a comparison result, whether a re-inspection position of the joint coating is accurate.

In an example, the modules in any of the above systems may be one or more integrated circuits configured to implement the above methods, for example: one or more application specific integrated circuits (ASICs), or one or more digital signal processors (DSPs), or one or more field programmable gate arrays (FPGAs), or a combination of at least two of these integrated circuit forms.

For another example, when the modules in the system may be implemented in a form of a processing element invoking a program, the processing element may be a general-purpose processor, such as a central processing unit (CPU) or other processor capable of invoking a program. For yet another example, these modules may be integrated together and implemented in a form of a system-on-a-chip (SOC).

Various messages/information/devices/network elements/systems/apparatuses/actions/operations/processes/concepts and other objects are named in the present disclosure. It can be understood that these exemplary names do not constitute limitations on the related objects, and the assigned names may change with factors such as a scenario, a context, or a usage habit. The technical meanings of technical terms in the present disclosure should be understood primarily based on the functions and technical effects they embody/perform in the technical solutions.

Those skilled in the art will clearly understand that, for the convenience and brevity of description, example working processes of the systems, apparatuses, and modules described above may refer to corresponding processes in the foregoing method embodiments, and details are not repeated herein.

Those of ordinary skill in the art will recognize that the modules and algorithm steps of the examples described in conjunction with the embodiments disclosed herein can be implemented in an electronic hardware, or a combination of computer software and electronic hardware. Whether these functions are performed in hardware or software depends on a specific application and design constraint conditions of the technical solution. Professional technicians may implement the described functions using different methods for each specific application, however, such implementation should not be considered as beyond the scope of the present disclosure.

Based on a same technical concept, the present disclosure further provides an electronic device. As shown in FIG. 6, the electronic device 300 includes a processor 301 and a memory 302, and the electronic device 300 may further include one or more of an information input/output (I/O) interface 303, or a communication component 304, and a communication bus 305.

The processor 301 is configured to control an overall operation of the electronic device 300 to perform the above ultrasonic testing method applied to joint coating inspection. The memory 302 is configured to store various types of data to support operation on the electronic device 300, and such data may include, for example, instructions for any application or method operating on the electronic device 300, and application-related data. The memory 302 may be implemented by any type of volatile or non-volatile storage device or a combination thereof, such as one or more of a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The I/O interface 303 provides an interface between the processor 301 and other interface modules, where other interface modules may be a keyboard, a mouse, or a button, etc. These buttons may be a virtual button or a physical button. The communication component 304 is configured for testing wired communication or wireless communication between the electronic device 300 and other devices. Wireless communication, such as wireless fidelity (Wi-Fi), Bluetooth, near field communication (NFC), 2G, 3G, or 4G, or a combination of one or more thereof, so a corresponding communication component 304 may include: a Wi-Fi component, a Bluetooth component, or an NFC component.

The communication bus 305 may include a path for transmitting information among the above components. The communication bus 305 may be a peripheral component interconnect (PCI) bus or an extended industry standard architecture (EISA) bus, etc. The communication bus 305 may be classified into an address bus, a data bus, or a control bus, etc.

The electronic device 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, for executing the ultrasonic testing method applied to joint coating inspection provided in the above embodiments.

The electronic device 300 may include, but is not limited to, mobile terminals such as a digital broadcast receiver, a personal digital assistant (PDA), or a portable multimedia player (PMP), and fixed terminals such as a digital television (TV), or a desktop computer, etc., and the electronic device 300 may also be a server, etc.

Based on a same technical concept, the present disclosure further provides a computer-readable storage medium (including a non-transitory computer-readable storage medium) having stored thereon a computer program that, the computer program, upon being executed by a processor, implements the above ultrasonic testing method applied to joint coating inspection.

The computer-readable storage medium may include: a USB flash drive, a removable hard disk, a read-only memory (ROM), a random access memory (RAM), a magnetic disk, or an optical disk, and various other media that may store program code.

The terms "comprising/including," "containing," or any other variation thereof are intended to cover non-exclusive inclusion, such that a process, a method, an article, or a device that includes a list of elements includes not only those elements but also other elements not explicitly listed, or elements inherent to such process, method, article, or device.

In addition, the terms "first," "second," etc. are used for descriptive purposes only and are not to be construed as indicating or implying relative importance or implicitly specifying a number of indicated technical features. Therefore, features defined with "first," "second," etc. may explicitly or implicitly include at least one of the features. In the description of the present disclosure, "multiple/plurality" means at least two, such as two, three, etc., unless explicitly limited otherwise.

In the description of the present specification, descriptions with reference to the terms "one/some embodiments," "some embodiments," "example," "specific example," or "some examples," etc., mean that some features, structures, materials, or characteristics described in conjunction with the embodiment or example are included in at least one embodiment or example of the present disclosure. In the present specification, schematic expressions of the above terms are not necessarily directed to a same embodiment or example. Moreover, the described features, structures, materials, or characteristics may be combined in any suitable manner in any one or more embodiments or examples. In addition, those skilled in the art may combine and assemble different embodiments or examples and features of different embodiments or examples described in the present specification without conflicting with each other.

In the description of the present disclosure, unless otherwise specified, "/" means "or," for example, A/B may mean A or B. It can be understood that, in an absence of confliction, the functions, or steps, etc. shown in the present disclosure may occur in an order different from that shown in the present disclosure, and there may be other functions, or steps, etc. between two adjacent functions, or steps, etc. shown in the present disclosure.

Although the embodiments of the present disclosure have been shown and described above, it can be understood that the above embodiments are exemplary and are not to be construed as limiting the present disclosure, and those of ordinary skill in the art may make changes, modifications, substitutions, and variations to the above embodiments within the scope of the present disclosure.

## Claims

1. An ultrasonic testing method applied to joint coating inspection, comprising:
obtaining first position information corresponding to a joint coating, and calculating, based on a preset first heuristic search algorithm, a movement path of an ultrasonic detector corresponding to the first position information;
obtaining, based on the movement path, a first ultrasonic image corresponding to the joint coating acquired by the ultrasonic detector; and
obtaining, based on a trained recognition model, joint coating identification information corresponding to the first ultrasonic image, wherein the joint coating identification information is abnormality determination information or normality determination information.

2. The ultrasonic testing method according to claim 1, wherein in a case where the joint coating identification information is the abnormality determination information, the method further comprises:
obtaining a target repair solution corresponding to the abnormality determination information, so as to repair the joint coating according to the target repair solution.

3. The ultrasonic testing method according to claim 2, wherein the obtaining the target repair solution corresponding to the abnormality determination information comprises:
obtaining a current key feature corresponding to the abnormality determination information, and querying, based on an established standard solution database, a target repair solution corresponding to the current key feature, wherein the standard solution database includes repair solutions corresponding to different key features.

4. The ultrasonic testing method according to claim 3, wherein after the obtaining the target repair solution corresponding to the abnormality determination information, the method further comprises:
obtaining a second ultrasonic image corresponding to the joint coating acquired by the ultrasonic detector upon repair is completed;
determining whether joint coating identification information corresponding to the second ultrasonic image is the abnormality determination information; and
correcting, in a case where the joint coating identification information corresponding to the second ultrasonic image is the abnormality determination information, the target repair solution in the standard solution database based on the second ultrasonic image and the abnormality determination information.

5. The ultrasonic testing method according to any one of claims 2 to 4, wherein after the joint coating has been repaired based on the target repair solution, the method further comprises:
obtaining, in a case where a repaired joint coating requires re-inspection, a first position coordinate corresponding to the ultrasonic detector and a second position coordinate corresponding to the joint coating;
calculating, based on a preset second heuristic search algorithm, a re-inspection path between the first position coordinate and the second position coordinate;
obtaining a third ultrasonic image corresponding to the repaired joint coating acquired by the ultrasonic detector during re-inspection according to the re-inspection path; and
comparing the third ultrasonic image with a preset ultrasonic image corresponding to the repaired joint coating, and determining, based on a comparison result, whether a re-inspection position of the joint coating is accurate.

6. The ultrasonic testing method according to any one of claims 1 to 5, wherein the obtaining the first position information corresponding to the joint coating comprises:
Sa: initializing, based on a search region, a set of particles to obtain a particle set, wherein second position information of each particle represents a hypothetical position corresponding to the joint coating, and assigning an initial weight to each particle, wherein initial weights corresponding to respective particles are equal to each other, and a weight corresponding to each particle is a parameter characterizing an accuracy of the hypothetical position;
Sb: predicting, based on a static model, a next position corresponding to each particle in the particle set, and updating the second position information of a corresponding particle according to each predicted position;
Sc: obtaining, for each particle, based on an updated second position information of the particle, a joint coating feature matching degree corresponding to the particle, and obtaining, based on the joint coating feature matching degree, an updated weight corresponding to the particle, wherein the updated weight is used to replace the initial weight as a new weight of the particle;
Sd: performing resampling, based on updated weights respectively corresponding to respective particles, to obtain a new particle set; and
Se: performing Sb to Sd repeatedly, based on the new particle set, until a preset ending condition is met, and outputting final first position information, based on updated second position information and updated weights of particles in the new particle set.

7. The ultrasonic testing method according to any one of claims 1 to 6, wherein a training method for a recognition model comprises:
obtaining a joint coating ultrasonic image dataset, preprocessing the joint coating ultrasonic image dataset, and dividing a preprocessed joint coating ultrasonic image dataset into a training set and a validation set;
labeling each piece of ultrasonic image data in the training set and the validation set to determine joint coating identification information corresponding to each piece of ultrasonic image data; and
training an initial model based on the training set, and validating a trained initial model through the validation set to obtain the trained recognition model.

8. An ultrasonic testing system applied to joint coating inspection, comprising:
a path planning unit, configured to obtain first position information corresponding to a joint coating, and calculating, based on a preset first heuristic search algorithm, a movement path of an ultrasonic detector corresponding to the first position information;
an acquisition unit, configured to obtain, based on the movement path, a first ultrasonic image corresponding to the joint coating acquired by the ultrasonic detector; and
an abnormality identification unit, configured to obtain, based on a trained recognition model, joint coating identification information corresponding to the first ultrasonic image, wherein the joint coating identification information is abnormality determination information or normality determination information.

9. An electronic device, comprising a processor and a memory, wherein the processor is coupled with the memory;
the processor is configured to execute a computer program stored in the memory, to enable the electronic device to perform the method according to any one of claims 1 to 7.

10. A computer-readable storage medium, comprising a computer program or instructions, wherein the computer program or the instructions, upon being run on a computer, enable the computer to perform the method according to any one of claims 1 to 7.

11. A computer program product, comprising computer instructions, wherein the computer instructions, upon being executed by a processor, implement the method according to any one of claims 1 to 7.

12. A computer program, comprising computer instructions, wherein the computer instructions, upon being executed by a processor, implement the method according to any one of claims 1 to 7.
